# EUROPÄISCHE PATENTSCHRIFT

(11) **EP 2 896 534 B1**
(45) Veröffentlichungstag und Bekanntmachung des Hinweises auf die Patenterteilung: **08.01.2020**
(21) Anmeldenummer: 14193051.1
(22) Anmeldetag: 13.11.2014
(51) Int. Cl.: B60N 2/06, B60N 2/005, B60N 2/14

(54) **Bewegungseinrichtung für einen Sitz**
Movement device for a seat
Dispositif de déplacement pour un siège

(30) Priorität: 20.01.2014 DE 102014000522
(43) Veröffentlichungstag der Anmeldung: 22.07.2015
(73) Patentinhaber: Lisa Dräxlmaier GmbH, 84137 Vilsbiburg (DE)
(72) Erfinder: Wensauer, Wolfgang, 94116 Hutthurm (DE); Sarcher, Stefan, 84137 Vilsbiburg (DE); Gerhard, Matthias, 21445 Wulfsen (DE)

(56) Entgegenhaltungen:
- EP-A1- 1 433 651
- EP-A2- 1 767 394
- EP-A2- 1 900 566
- EP-A2- 2 213 504
- WO-A1-2006/041570
- WO-A1-2007/094707
- DE-A1-102009 033 797
- JP-A- H09 589

## Beschreibung

Die Erfindung betrifft eine Bewegungseinrichtung für einen Sitz, welche einen Träger mit einer daran angebrachten ersten Linearführungseinheit aufweist. Die Erfindung betrifft ferner einen Sitz mit einer solchen Bewegungseinrichtung.

WO 2013/095987 A1 offenbart eine Sitzdrehanordnung für eine Flugzeugsitzeinheit, die ein Paar von in Querrichtung beabstandeten Grundschienen umfasst, die jeweils vorne und hinten Verbindungsbereiche zum Verbinden der Grundschienen mit einem Flugzeugdeck aufweisen. Die Basisschienen definieren eine sich quer erstreckende horizontale Ebene, die sich zwischen dem Paar von Basisschienen erstreckt. Eine Drehanordnung ist zwischen dem Paar von Basisschienen in der sich seitlich erstreckenden horizontalen Ebene angebracht. Die Drehanordnung stellt einen flachen Sitz mit einem Holm bereit, der einen Teil der Drehanordnung bildet und Lasten von dem Sitz effektiv an das Flugzeugdeck weiterleitet. Eine Gleitanordnung ermöglicht es einem Sitznutzer, die Insassen des Sitzes sowohl nach vorne und nach hinten als auch von einer Seite zur anderen Seite zu verschieben, und zwar unabhängig von der Drehung des Sitzes auf der Drehanordnung.

WO 2006/041570 A1 offenbart einen beweglichen Sitz mit einer Sitzrahmenbaugruppe und einer sich verjüngenden Drehanordnung, wobei die sich verjüngende Drehanordnung Komponenten aufweist, die zueinander seitlich unbeweglich sind, und zwar trotz der von der Sitzrahmenbaugruppe auf die sich verjüngende Drehanordnung aufgebrachten Kräften.

In EP 1 900 566 A2 wird ein Fahrzeugsitz mit einem Sitzteil und einem mit dem Sitzteil verbundenen Grundgestell offenbart, wobei das Grundgestell mindestens ein erstes Schienenelement zum Verschieben des Sitzteils aufweist und wobei das erste Schienenelement in einer ersten Ebene und mindestens ein zweites Schienenelement zum Verschieben des Sitzteils in einer zweiten Ebene mittels einer Dreheinrichtung derart miteinanderverbunden sind, dass ihre gegenseitige Ausrichtung veränderbar ist.

US 5,161,765 offenbart ein Sitzgestell, das eine omnidirektionale Bewegung des Sitzes in einer Ebene ermöglicht, und zwar mittels zweier Paare von Schubstangen, von denen ein Paar senkrecht zu dem anderen Paar angeordnet ist, und einer drehbaren Scheibe. Stangen werden mittels einer Reihe von schrägen fachartigen Stücken verriegelt und freigegeben, die durch einen Nockenmechanismus bewegt werden. Die drehbare Scheibe wird mittels eines Stifts verriegelt und freigegeben, der sich durch die Scheibe in ein darunterliegendes Loch erstreckt. Verriegelungs- und Freigabemechanismen werden durch ein einziges Kabel gesteuert.

Auch die US 6000659 A, die EP 2213504A2, die WO 99/28146A1 oder die DE 102012112527B3 zeigen Sitze, die in Lagern verschiebbare Bewegungseinrichtungen offenbaren, jedoch eine Mehrzahl solcher Bewegungseinrichtungen pro Verschiebungsrichtung benötigen.

Aus EP 1 767 394 A1 ist Figuren 7 und 8 ein Sitz für einen Bus mit zwei senkrecht zueinander ausgerichteten Plattformen bekannt, in die jeweils schwalbenschwanzförmige Backen in hinterschnittene Nuten eingreifen und so eine X/Y-Bewegung des Sitzes ermöglichen. Die Nuten sind jeweils auf der Oberseite der Plattform angeordnet. Die Führung ist reibungsintensiv und nicht hinreichend verwindungssteif.

EP 1 433 651 A1 offenbart eine Gleitvorrichtung, die mit Schienenelementen des ersten Typs versehen ist, die Räume bilden, die seitwärts offen sind und sich in einer Längsrichtung der Schienenelemente des ersten Typs und von Schienenelementen eines zweiten Typs erstrecken, die in den Räumen positioniert sind. Eines jeweiliges Schienenelement des ersten Typs und des zweiten Typs, die relativ zueinander beweglich sind, sind als beweglich Schienenelemente ausgebildet, während das andere der Schienenelemente des ersten Typs und des zweiten Typs als feste Seite Schienenelemente ausgebildet sind. Die Schienenelemente auf der beweglichen Seite sind an beiden Seitenteilen von Gleitplatten vorgesehen, die parallel zueinander über einer Klammer angeordnet sind. Das Schienenelement auf der beweglichen Seite, das auf der Gleitplatte vorgesehen ist, wird durch das Schienenelement auf der festen Seite getragen, das auf der Gleitplatte vorgesehen ist.

Es ist die **Aufgabe** der vorliegenden Erfindung, die Nachteile des Standes der Technik zumindest teilweise zu überwinden und insbesondere einen verbesserten Mechanismus für eine Bewegung eines Sitzes bereitzustellen. Es ist eine spezielle Aufgabe der vorliegenden Erfindung, einen besonders kompakten und präzisen Bewegungsmechanismus für einen Sitz bereitzustellen.

Diese Aufgabe wird gemäß den Merkmalen des unabhängigen Anspruchs 1 gelöst. Bevorzugte Ausführungsformen sind insbesondere den abhängigen Ansprüchen entnehmbar.

Die Aufgabe wird gelöst durch eine Bewegungseinrichtung für einen Sitz, aufweisend einen Träger mit einer daran angebrachten ersten Linearführungseinheit, welche (zumindest) ein erstes Paar von Lagern und einen zwischen den Lagern linearbeweglich geführten ersten quaderförmigen Linearschlitten aufweist, wobei die beiden Lager des ersten Paars in jeweilige Längsseiten des ersten Linearschlittens eingreifen.

Diese Bewegungseinrichtung ermöglicht durch die Verwendung des Linearschlittens einen besonders kompakten sowie steifen und dadurch präzise auslenkenden Aufbau. So lässt sich ein Linearschlitten (z.B. im Gegensatz zu typischen Rohrgestängen) auch bei einer größeren Auslenkung nicht durchbiegen und ist durch seine quaderförmige Form sehr steif. Sie verhält sich auch im Fall eines Aufpralls ("Crash-Fall") steif und neigt nur wenig zu einer plastischen Verformung. Dies wiederum erweitert einen nutzbaren Installationsraum, da Fluchtwege nicht oder nur geringfügig eingeengt werden Ein solcher Linearschlitten und eine damit ausgerüstete Bewegungseinrichtung sind zudem dadurch, dass die beiden Lager des ersten Paars in jeweilige Längsseiten des ersten Linearschlittens eingreifen, besonders flach und somit kompakt aufbaubar. Die beiden Lager bilden also eine Linearführung für den ersten Linearschlitten.

Die Bewegungseinrichtung ist insbesondere dazu vorgesehen, eine Position eines in einem Fahrzeug eingebauten Sitzes relativ zu dem Fahrzeug zu verstellen, insbesondere durch einen Nutzer des Sitzes. Das Fahrzeug kann ein Kraftfahrzeug, ein Flugzeug, ein Eisenbahnwagen oder ein Schiff sein.

Der Träger ist insbesondere dazu vorgesehen, den Sitz mit dem Fahrzeug bzw. einer Fahrzeugstruktur zu verbinden, insbesondere mit einer oder mit mehreren Sitzschienen. Der Träger mag den Sitz direkt oder indirekt über mindestens ein zusätzliches Verbindungselement (z.B. umfassend mindestens ein Stuhlbein und/oder eine Höhenverstellung) mit dem Fahrzeug verbinden.

Die erste Linearführungseinheit dient insbesondere dazu, einen Sitzbereich des Sitzes (z.B. umfassend eine Sitzfläche, eine Rückenlehne usw.), insbesondere ein Sitzgestell davon, in einer insbesondere horizontalen Richtung (z.B. parallel zu einem Flugdeck) linear zu verschieben. Die Bewegungseinrichtung mag dann auch als Verschiebeeinrichtung angesehen werden. In dieser Betrachtungsweise stellt die Bewegungseinrichtung einen Teil des Sitzes dar. Alternativ mag die Bewegungseinrichtung keinen Teil des Sitzes als solchen darstellen, sondern den Sitz tragen.

Die erste Linearführungseinheit mag insbesondere dazu dienen, den Sitzbereich des Sitzes entlang einer Längserstreckung des Fahrzeugs ("vor und zurück") zu verschieben oder quer zu der Längserstreckung des Fahrzeugs ("seitlich") zu verschieben.

Es ist eine besonders einfache und preiswerte Weiterbildung, dass der Sitzbereich des Sitzes, insbesondere ein Sitzgestell davon, fest (d.h. ohne weitere zwischengeschaltete rotatorisch oder linear bewegliche Teile) mit der ersten Linearführungseinheit verbunden ist. Der Sitzbereich des Sitzes ist dann insbesondere in nur einer Richtung verschiebbar, nämlich entlang der Bewegungsrichtung der ersten Linearführungseinheit.

Die beiden Lager und der erste Linearschlitten mögen insbesondere gegeneinander gleiten und/oder rollen.

Der erste Linearschlitten weist insbesondere eine in einer vorgesehenen Bewegungsrichtung längliche Grundform auf. Er weist beispielsweise eine quaderförmige Grundform auf, insbesondere mit einer Länge L, einer Breite a und einer Höhe b in einer Relation L > a > b, insbesondere L > 3 a > 6 b. Verhältnisse von a:b von 3:1 bis 10:1, insbesondere 4:1 bis 6:1 haben sich als besonders vorteilhaft erwiesen, da sich eine hohe Steifigkeit mit geringem Materialverbrauch miteinander verbinden. Vorteilhafterweise ist es damit möglich, pro Bewegungsrichtung nur einen einzigen Linearschlitten zu verbauen.

Die Längsseiten mögen beispielsweise jeweils eine Längsnut aufweisen, die sich entlang der Länge des ersten Linearschlittens erstreckt. In diese Längsnuten mag mindestens ein Vorsprung eines jeweiligen Lagers des ersten Paares eingreifen. Diese Weiterbildung ermöglicht eine besonders einfach umsetzbare und stabile Führung.

Es ist eine Weiterbildung, dass die Lager fest an dem Träger angebracht sind. Dann ist nur der erste Linearschlitten gegen den Träger längsverschieblich. Die Lager können z.B. mit dem Träger verschweißt, verklebt und/oder verschraubt sein.

Es ist noch eine Weiterbildung, dass die Lager fest auf dem Träger angebracht sind, also oberhalb des Trägers positioniert sind. Dies vereinfacht einen Aufbau der Bewegungseinrichtung.

Es ist eine Ausgestaltung, dass die Bewegungseinrichtung ein an der ersten Linearführungseinheit, insbesondere an dessen ersten Linearschlitten, angebrachtes Drehlager aufweist. So kann ein mit dem Drehlager verbundener Sitzbereich auch ohne Linearverschiebung gedreht werden. Eine solche Bewegungseinrichtung mag insbesondere eine Verschiebung des Sitzbereichs in Bewegungsrichtung der ersten Linearführungseinheit und unabhängig davon eine Drehung des Sitzbereichs erlauben. Die Drehung des Sitzbereichs mag umlaufend oder winkelbegrenzt sein. Die Bewegungseinrichtung mag in dieser Ausgestaltung auch als eine Verschiebe- und Dreheinheit bezeichnet werden.

Es ist eine Weiterbildung, dass das Drehlager auf der ersten Linearführungseinheit, insbesondere auf dessen ersten Linearschlitten, befestigt ist, also oberhalb davon. Diese Weiterbildung ermöglicht einen besonders einfachen und flachen Aufbau. Zudem bleibt durch das oben liegende Drehlager die Drehachse relativ zum aufmontierten Sitzbereich, insbesondere Sitzgestell, immer gleich. Es kommt nicht zu einer exzentrischen Drehbewegung.

Es ist noch eine Weiterbildung, dass eine durch die erste Linearführungseinheit festgelegte Bewegungsrichtung und eine Drehachse des Drehlagers senkrecht bzw. in einem Winkel von 90° zueinander versetzt sind.

Es ist noch eine Ausgestaltung, dass die Bewegungseinrichtung eine an dem ersten Linearschlitten fest angebrachte zweite Linearführungseinheit aufweist, wobei die erste Linearführungseinheit und die zweite Linearführungseinheit zueinander winkelversetzte Bewegungsrichtungen aufweisen. Dadurch wird eine lineare Verschiebung des Sitzbereichs in einer Ebene ermöglicht. Gleichzeitig bleibt ein sehr steifer und kompakter Aufbau erhalten. Es ist eine Weiterbildung, dass die beiden Linearführungseinheiten in einer horizontalen Ebene senkrecht zueinander winkelversetzte Bewegungsrichtungen aufweisen. Dies ermöglicht eine besonders einfache und intuitive Verschiebung des Sitzbereichs in der Ebene durch einen Nutzer.

Die beiden Linearführungseinheiten brauchen grundsätzlich nicht gleich aufgebaut zu sein, mögen es jedoch für einen vereinfachten Aufbau und eine besonders kostengünstige Herstellung sein.

Es ist eine weitere Ausgestaltung, dass die zweite Linearführungseinheit ein zweites Paar von Lagern und einen zwischen diesen Lagern linearbeweglich geführten zweiten Linearschlitten aufweist, die beiden Lager des ersten Paars in jeweilige Längsseiten des zweiten Linearschlittens eingreifen und die Lager des zweiten Paares an dem ersten Linearschlitten fest angebracht sind. So wird ein besonders einfacher Aufbau ermöglicht.

Es ist eine Weiterbildung, dass der erste Linearschlitten und der zweite Linearschlitten voneinander beabstandet sind, z.B. durch einen schmalen Spalt, um Reibungsverluste zwischen ihnen zu vermeiden.

Es ist noch eine weitere Ausgestaltung, dass die Lager zumindest einer Linearführungseinheit Rollenschuhe sind. Dies ermöglicht eine besonders widerstandsarme und ruckfreie Verschiebung des Linearschlittens. Insbesondere können die Rollenschuhe ein oder mehrere drehbare Rollen (z.B. Kugeln oder Walzen) aufweisen, welche sich in Eingriff mit dem Linearschlitten befinden, insbesondere mit einer Längsnut in einer Seitenwand des Linearschlittens. Die Längsnut mag dann eine schalenförmige Querschnittsform aufweisen. Bei zwei Linearführungseinheiten mag eine oder mögen beide durch Rollenschuhe geführt werden.

Vorteilhafterweise weisen die Lager zumindest eine der jeweiligen Längsseite des Linearschlittens zugewandte Auswölbung auf, die in Längsnuten der jeweiligen Längsseiten des jeweiligen Linearschlittens eingreifen. Durch die feste Passform wird eine hohe Steifigkeit der Linearführungseinheit erreicht. Diese Auswölbung kann durch die Rollenschuhe erreicht werden.

Um eine Reibung zwischen Lager und Linearschlitten zu verringern und/oder um eine Abnutzung zu verringern, sind die Längsnuten von jeweils zwei, symmetrisch zur Längsnut angeordneten Gleitschienen, vorteilhafterweise aus einem zweiten harten, sich vom übrigen Material des Lagers unterscheidenden Material, begrenzt.

Eine weitere vorteilhafte Ausbildung der Erfindung sieht vor, dass die Befestigung des ersten Linearschlittens mit der zweiten Linearführungseinheit mittels einer mittig angeordneten und sich entlang einer Längserstreckung der zweiten Linearführungseinheit verlaufenden Nut in einer unteren Breitseite der zweiten Linearführungseinheit erfolgt. Für eine hohe Steifigkeit der Bewegungseinrichtung wird damit ein Formschluss über eine größere Länge ermöglicht, beispielsweise indem die Nut einen Hinterschnitt enthält, in den ein Befestigungselement des ersten Linearschlittens eingreift, welches vorteilhafterweise eine H-Form aufweist. Vorteilhafterweise sind die Linearführungseinheiten an ihrer Unterseite mit einer T-Nut versehen und über einen in die T-Nut eingreifenden H-förmigen Träger zur Aufnahme hoher Kräfte im Crash-Fall mit der darunterliegenden Befestigung verbunden. Diese T-Nut oder ein anderer Hinterschnitt erzeugen einen guten Halt für die Befestigung der Linearführungseinheit oder von anderen Einheiten an der Linearführungseinheit.

In dieser Nut kann vorteilhafterweise auch ein Reibbremse für die Relativbewegung zwischen den zwei Linearführungseinheiten angeordnet sein.

Es ist ferner eine Ausgestaltung, dass die Bewegungseinrichtung ein an dem zweiten Linearschlitten angebrachtes Drehlager aufweist. Das Drehlager ist insbesondere auf dem zweiten Linearschlitten angebracht. So lässt sich der Sitzbereich in einer horizontalen Ebene frei bewegen und lässt sich auch frei davon drehen. So kann eine besonders einfache und vielseitige Anpassung einer Sitzposition erreicht werden.

Es ist auch eine Ausgestaltung, dass das Drehlager mittig an dem Linearschlitten angebracht ist, was vorteilhafterweise auf einfache Weise eine zentrische Drehung des Sitzbereichs ermöglicht. Der Durchmesser des Drehlagers ist groß und entspricht etwa der Länge des Linearschlittens auf dem es befestigt ist.

Es ist außerdem eine Ausgestaltung, dass dem Drehlager eine Bremse, insbesondere Reibbremse, zugeordnet ist. So kann eine grundsätzlich frei wählbare Drehposition des Sitzbereichs einfach fixiert und wieder gelöst werden.

Es ist zudem eine Ausgestaltung, dass die erste Linearführungseinheit oberhalb des Trägers, die zweite Linearführungseinheit oberhalb der ersten Linearführungseinheit und das Drehlager oberhalb der zweiten Linearführungseinheit angeordnet sind. Diese übereinander gestapelte Anordnung der unterschiedlichen Funktionselemente ermöglicht eine besonders kompakte und steife Anordnung zur vielseitigen Positionierung eines Sitzes, die zudem einfach montierbar ist.

Es ist darüber hinaus eine Ausgestaltung, dass mindestens einer Linearführungseinheit eine Bremse, insbesondere Reibbremse, zugeordnet ist. So kann eine grundsätzlich frei wählbare Linearverschiebungsposition des Sitzbereichs einfach fixiert und wieder gelöst werden.

Es ist auch noch eine Ausgestaltung, dass die Bewegungseinrichtung eine Blockiereinrichtung aufweist, mittels welcher die Bewegungseinrichtung in mindestens einer vorbestimmten Position (auch als "Grundposition" bezeichnet) blockierbar, insbesondere formschlüssig blockierbar, ist. Dies ergibt den Vorteil, dass durch einen weiteren Lastpfad eine Belastung der Lineareinheiten bei hohen Lastaufgaben (z.B. im Crash-Fall) reduziert werden kann. Insbesondere können in der vorbestimmten Position alle translatorischen und rotatorischen Bewegungen durch die Blockiereinrichtung blockiert werden. Die Bewegungseinrichtung mag eine oder mehrere Grundpositionen aufweisen. Es ist eine Weiterbildung, dass in einer Grundposition der mindestens eine Linearschlitten symmetrisch in den Lagern gehalten wird und also nicht in einer Richtung weiter versetzt ist als in der entgegengesetzten Richtung. Es ist eine Weiterbildung, dass in einer Grundposition eine Drehachse des Drehlagers durch eine Mitte des Trägers läuft.

Es ist eine Weiterbildung, dass die Blockiereinrichtung mindestens einen wahlweise ausfahrbaren und einziehbaren Stift, Bolzen oder Hebel aufweist, welcher in der Grundposition in entsprechende Löcher oder Bohrungen mindestens eines Linearschlittens und/oder des Drehlagers einführbar ist.

Die Aufgabe wird auch gelöst durch einen Sitz, aufweisend eine Bewegungseinrichtung wie oben beschrieben.

Der Sitz mag grundsätzlich ein Sitz eines beliebigen Fahrzeugs, insbesondere eines Luftfahrzeugs sein, beispielsweise eines Passagier- oder Frachtflugzeugs, z.B. zur Nutzung in der zivilen Luftfahrt. Der Flugzeugsitz mag z.B. ein Pilotensitz oder ein Passagiersitz sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden schematischen Beschreibung eines Ausführungsbeispiels, das im Zusammenhang mit den Zeichnungen näher erläutert wird. Dabei können zur Übersichtlichkeit gleiche oder gleichwirkende Elemente mit gleichen Bezugszeichen versehen sein.
- Fig.1: zeigt eine Bewegungseinrichtung in einer Ansicht von schräg oben;
- Fig.2: zeigt die Bewegungseinrichtung aus Fig.1 in einer Ansicht von schräg unten; und
- Fig.3 und 4: zeigen die Bewegungseinrichtung mit Linearführungseinheiten aus unterschiedlichen Richtungen.

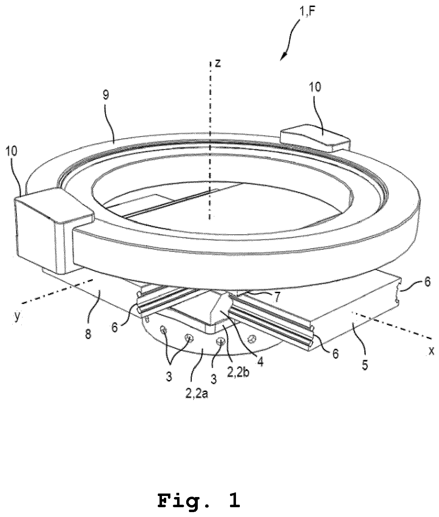

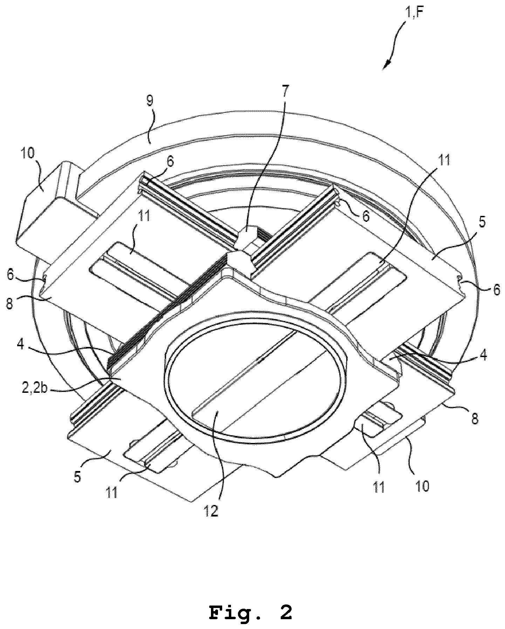

**Fig.1** zeigt eine Bewegungseinrichtung 1 in einer Ansicht von schräg oben. **Fig.2** zeigt die Bewegungseinrichtung 1 in einer Ansicht von schräg unten. Die Bewegungseinrichtung 1 wird als ein Teil eines Flugzeugsitzes F angesehen.

Die Bewegungseinrichtung 1 weist an ihrer Unterseite einen Träger 2 auf, über welchen die Bewegungseinrichtung 1 mit einer Flugzeugstruktur (o. Abb.) verbindbar ist. Der Träger 2 weist einen ringförmigen Adapterteil 2a auf, in welchen mehrere Löcher 3 als Verbindungselemente eingebracht sind. An einem oberen Rand des ringförmigen Adapterteils 2a schließt eine sich horizontal erstreckende Trägerplatte 2b des Trägers 2 an.

Auf einer Oberseite der Trägerplatte 2b ist ein erstes Paar von Rollenschuhen 4 befestigt, welches einen dazwischen angeordneten ersten Linearschlitten 5 in einer x-Richtung linearbeweglich führt. Zum Eingriff von Rollen (o. Abb.) der Rollenschuhe 4 weist der eine quaderartig geformte erste Linearschlitten 5 beidseitig eine jeweilige Längsnut 6 auf, welche sich entlang einer zugehörigen Seitenfläche des ersten Linearschlittens 5 erstreckt. Das erste Paar von Rollenschuhen 4 und der erste Linearschlitten 5 können eine erste Linearführungseinheit 4, 5 oder zumindest einen Teil davon bilden.

An der Oberseite des ersten Linearschlittens 5 ist ein zweites Paar von Rollenschuhen 7 befestigt, und zwar mittig auf dem ersten Linearschlitten 5. Die Rollenschuhe 7 führen einen dazwischen angeordneten zweiten Linearschlitten 8 in einer zu der x-Richtung um 90° in der horizontalen Ebene winkelversetzten y-Richtung linearbeweglich. Folglich lässt sich ein Punkt auf dem zweiten Linearschlitten 8 mittels einer Linearverschiebung des ersten Linearschlittens 5 in x-Richtung und unabhängig davon mittels einer Linearverschiebung des zweiten Linearschlittens 8 in y-Richtung verschieben. Das zweite Paar von Rollenschuhen 7 und der zweite Linearschlitten 8 können eine zweite Linearführungseinheit 7, 8 oder zumindest einen Teil davon bilden.

Die Rollenschuhe 7 sind baugleich zu den Rollenschuhen 4 ausgestaltet. Auch sind der erste Linearschlitten 5 und der zweite Linearschlitten 8 baugleich ausgestaltet. Beiden Linearschlitten 5, 8 sind angeschraubte Reibbremsen 11 (siehe Fig.2) zugeordnet, um sie an beliebiger Verschiebungsposition fixieren oder arretieren zu können. Die Reibbremsen bilden Teil und Begrenzung einer T-Nut an der Unterseite der Linearschlitten 5, 8. In diese T-Nut greift ein T-förmiger Träger ein und sichert den jeweiligen Linearschlitten 5, 8 an der darunterliegenden Befestigung.

An der Oberseite des zweiten Linearschlittens 8 ist zentrisch ein Drehlager 9 großen Durchmessers angebracht, welches eine Drehachse in einer z-Richtung senkrecht zu einer (x, y)-Ebene aufweist. Dies erlaubt eine Drehung eines auf dem Drehlager 9 montierten Sitzgestells (Sitzfläche und Rückenlehne o. Abb.), z.B. um eine reine Rotationsbewegung des Sitz ohne exzentrische Verschiebung zu ermöglichen. Der Durchmesser des Drehlagers 9 entspricht etwa der Länge des zweiten Linearschlittens 8. Das Drehlager 9 weist zur Befestigung des Sitzgestells zwei gegenüberliegend angeordnete Befestigungsbereiche 10 auf. Das Drehlager 9 ist unabhängig von den Linearschlitten 5, 8 drehbar und mittels einer Reibbremse in einer beliebigen Winkelposition fixierbar oder arretierbar.

Die Bewegungseinrichtung 1 beschreibt also eine Verschiebe- und Dreheinheit für einen Flugzeugsitz mit hier zwei in x-bzw. y-Richtung verschiebbaren, übereinander angeordneten Linearführungseinheiten 4, 5 bzw. 7, 8 sowie einem darauf angebrachten Drehlager 9 für eine Rotation um die z-Richtung zur Aufnahme eines Sitzgestells. Der sehr kompakte Aufbau der Bewegungseinrichtung 1 ermöglich eine sehr steife Auslegung, welche eine nur sehr geringe Verformung bei auch sehr hohen äußeren Belastungen zulässt.

Wie in Fig.2 gezeigt, weist die Bewegungseinrichtung 1 ferner eine Blockiereinrichtung auf, von der hier nur ein Teil (nämlich ein "Eingriffsteil" 12) gezeigt ist. Das Eingriffsteil 12 weist ein oder mehrere nach oben und damit in Richtung der Linearschlitten 5, 8 und des Drehlagers 9 gerichtete Stifte, Bolzen oder Hebel (o. Abb.) auf. Das Eingriffsteil 12 ist zudem entlang der z-Richtung höhenverstellbar. Befinden sich die Linearschlitten 5, 8 und das Drehlager 9 in einer vorbestimmten Grundposition (z.B. die Linearschlitten 5, 8 symmetrisch zwischen ihren Rollenschuhen 4 bzw. 7), kann das Eingriffsteil 12 den mindestens einen Bolzen in fluchtende Bohrungen in den Linearschlitten 5, 8 und in dem Drehlager 9 einschieben. So werden alle translatorischen und rotatorischen Bewegungen formschlüssig blockiert. Zudem wird nun durch einen weiteren Lastpfad eine Belastung der Linearführungseinheiten 4, 5 bzw. 7, 8 auch bei hohen Lastaufbringungen reduziert.

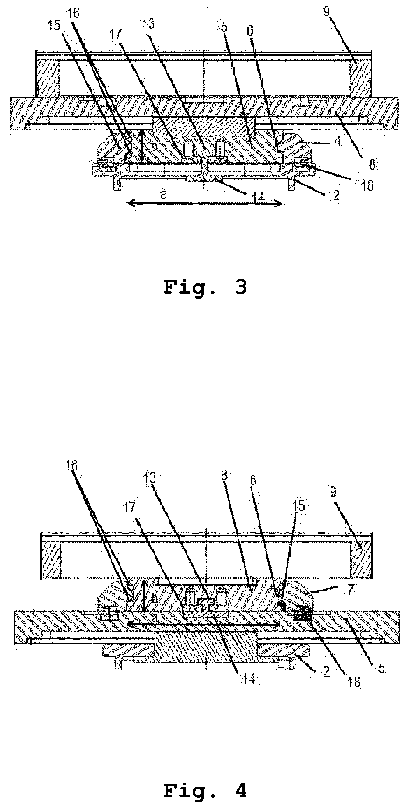

Figur 3 zeigt eine erfinderische Bewegungseinrichtung mit zwei im 90° Winkel übereinander angeordneten Linearführungseinheiten 4, 5, 7, 8, die in Paaren von Rollenschuhen 4, 7 gelagerte Linearschlitten 5, 8 enthalten. In Figur 4 sind auch die Rollenschuhe 4 des ersten Linearschlittens 5 deutlich erkennbar. Pro Bewegungsrichtung ist genau eine Linearführungseinheit 5 bzw. 8 vorgesehen. Die Rollenschuhe 4 weisen eine Auswölbung 15 auf, die jeweils in eine Längsnut 6 des anliegenden Linearschlittens 5 eingreift. Die Längsnut 6 wird von zwei Gleitschienen 16 begrenzt, die bei der Bewegung reibungsarm mit den Rollenschuhen 4 in Kontakt sind. Die Gleitschienen 16 sind zu einer Mittelachse der Längsnut 6 symmetrisch angeordnet.

Die Lager (Rollenschuhe) 4 des ersten Linearschlittens 5 sind jeweils mittels Halteelemente 18 mit einem Träger 2 verbunden, beispielsweise verschraubt. Weiterhin führt ein Befestigungselement 14 mittig eine stabilisierende Verbindung zur darunterliegenden Struktur herbei. Dieses Befestigungselement 14 hat eine H-Form und nutzt einen T-förmigen Hinterschnitt in der Linearführungseinheit 5 aus, der durch das Anschrauben zweier, einen Spalt lassenden, Bodenplatten in eine Nut 13 in der unteren Breitseite des ersten Linearschlittens 5 entsteht.

Das Verhältnis von Breite a zu Höhe b des Linearschlittens 5 ist 4,5 : 1, kann jedoch nach Belastungsfall zwischen 4 : 1 und 6 : 1 variiert werden, wodurch eine einzige Linearführungseinheit pro Bewegungsrichtung ausreicht und eine hohe Steifigkeit gegeben ist.

Figur 4 zeigt die Bewegungseinrichtung aus Figur 3, jedoch aus einer anderen Blickrichtung, so dass die Elemente der zweiten Linearführungseinheit besser sichtbar sind. Aufbau von Linearschlitten 8 und Lager 7 entsprechen denen der darunterliegenden Ebene (erste Linearführungseinheit 4, 5). Die Länge der Linearführungseinheiten 5, 8 kann sich unterscheiden, wenn die Bewegungswege beider Bewegungsrichtungen entsprechend unterschiedlich sind.

Neben Halteelementen 18, die die Rollenschuhe 7 des zweiten Linearschlittens 8 mit der darunterliegenden ersten Linearführungseinheit verbinden, bewirkt auch hier ein T-förmiges Befestigungselement 14 mittig eine stabilisierende Verbindung zur darunterliegenden Struktur. Diese Verbindung wirkt auf die Struktur stabilisierend und kann zudem als Reibbremse benutzt werden.

Der zweite Linearschlitten 8 ist mit einem Drehlager 9 verbunden, so dass mit der Bewegungseinrichtung zusätzlich die Drehbewegung unterstützt wird.

Selbstverständlich ist die vorliegende Erfindung nicht auf das gezeigte Ausführungsbeispiel beschränkt.

Allgemein kann unter "ein", "eine" usw. eine Einzahl oder eine Mehrzahl verstanden werden, insbesondere im Sinne von "mindestens ein" oder "ein oder mehrere" usw., solange dies nicht explizit ausgeschlossen ist, z.B. durch den Ausdruck "genau ein" usw.

Beispielsweise mag der erste Linearschlitten mittels genau eines ersten Paares von Lagern linearbeweglich geführt werden, oder er mag mittels eines ersten Paares von Lagern und zusätzlich mindestens einem weiteren Lager linearbeweglich geführt werden, beispielsweise mittels zwei, drei, vier usw. ersten Paaren von Lagern. Dies kann analog für den zweiten Linearschlitten und das zweite Paar von Lagern gelten.

Auch kann eine Zahlenangabe sowohl genau die angegebene Zahl als auch einen üblichen Toleranzbereich umfassen, solange dies nicht explizit ausgeschlossen ist.

### Bezugszeichenliste

- 1: Bewegungseinrichtung
- 2: Träger
- 2a: ringförmiges Adapterteil des Trägers
- 2b: Trägerplatte des Trägers
- 3: Loch
- 4: Rollenschuh eines ersten Paares
- 5: erster Linearschlitten
- 6: Längsnut
- 7: Rollenschuh eines zweiten Paares
- 8: zweiter Linearschlitten
- 9: Drehlager
- 10: Befestigungsbereich
- 11: Reibbremse
- 12: Eingriffsteil
- 13: Nut
- 14: Befestigungselement
- 15: Auswölbung
- 16: Gleitschienen
- 17: Hinterschnitt
- 18: Halteelement
- a: Breite Linearschlitten
- b: Höhe Linearschlitten
- x: x-Richtung
- y: y-Richtung
- z: z-Richtung

## Patentansprüche

1. Bewegungseinrichtung (1) für einen Sitz (F), aufweisend
- einen Träger (2) mit einer daran angebrachten ersten Linearführungseinheit (4, 5),
- welche ein erstes Paar von Lagern (4) und einen zwischen den Lagern (4) linearbeweglich geführten ersten quaderförmigen Linearschlitten (5) aufweist,
- wobei die beiden Lager des ersten Paars in jeweilige Längsseiten des ersten Linearschlittens (5) eingreifen.

2. Bewegungseinrichtung (1) nach Anspruch 1, ferner aufweisend ein an dem ersten Linearschlitten (5) angebrachtes Drehlager (9).

3. Bewegungseinrichtung (1) nach Anspruch 1, ferner aufweisend
- eine an dem ersten Linearschlitten (5) fest angebrachte zweite Linearführungseinheit (7, 8), wobei
- die erste Linearführungseinheit (4, 5) und die zweite Linearführungseinheit (7, 8) zueinander winkelversetzte, insbesondere in einer horizontalen Ebene senkrecht zueinander winkelversetzte, Bewegungsrichtungen (x, y) aufweisen.

4. Bewegungseinrichtung (1) nach Anspruch 3, wobei
- die zweite Linearführungseinheit (7, 8) ein zweites Paar von Lagern (7) und einen zwischen diesen Lagern (7) linearbeweglich geführten zweiten Linearschlitten (8) aufweist,
- die beiden Lager des ersten Paars in jeweilige Längsseiten des zweiten Linearschlittens (8) eingreifen und
- die Lager (7) des zweiten Paares an dem ersten Linearschlitten (5) fest angebracht sind.

5. Bewegungseinrichtung (1) nach einem der vorhergehenden Ansprüche, wobei die Lager (4, 7) zumindest einer Linearführungseinheit (4, 5, 7, 8) Rollenschuhe sind.

6. Bewegungseinrichtung (1) nach einem der Ansprüche 3 oder 4, ferner aufweisend ein an dem zweiten Linearschlitten (8) angebrachtes Drehlager (9).

7. Bewegungseinrichtung (1) nach einem der Ansprüche 2 oder 6, wobei das Drehlager (9) mittig an dem Linearschlitten (5, 8) angebracht ist.

8. Bewegungseinrichtung (1) nach einem der Ansprüche 2, 6 oder 7, wobei dem Drehlager (9) eine Bremse, insbesondere Reibbremse, zugeordnet ist.

9. Bewegungseinrichtung (1) nach einem der Ansprüche 6 bis 8, wobei die erste Linearführungseinheit (4, 5) oberhalb des Trägers (2), die zweite Linearführungseinheit (7, 8) oberhalb der ersten Linearführungseinheit (4, 5) und das Drehlager (9) oberhalb der zweiten Linearführungseinheit (7, 8) angeordnet sind.

10. Bewegungseinrichtung (1) nach einem der vorhergehenden Ansprüche, wobei mindestens einer Linearführungseinheit (4, 5, 7, 8) eine Bremse (11), insbesondere Reibbremse, zugeordnet ist.

11. Bewegungseinrichtung (1) nach einem der vorhergehenden Ansprüche, ferner aufweisend eine Blockiereinrichtung (12), mittels welcher die Bewegungseinrichtung (1) in mindestens einer vorbestimmten Position blockierbar, insbesondere formschlüssig blockierbar, ist.

12. Bewegungseinrichtung (1) nach einem der vorhergehenden Ansprüche, wobei die Lager (4,7) eine den jeweiligen Längsseiten der Linearschlitten (5, 7, 8) zugewandte Auswölbung (15) aufweist, die in Längsnuten (6) der jeweiligen Längsseiten des jeweiligen Linearschlitten (5, 7, 8) eingreifen.

13. Bewegungseinrichtung (1) nach Anspruch 12, wobei die Längsnuten (6) von jeweils zwei, symmetrisch zur Längsnut (6), angeordneten Gleitschienen (16) begrenzt sind.

14. Bewegungseinrichtung (1) nach einem der Ansprüche 3 bis 13, wobei die Befestigung des ersten Linearschlittens (5) mit der zweiten Linearführungseinheit (7, 8) mittels einer mittig angeordneten und sich entlang einer Längserstreckung der zweiten Linearführungseinheit (7, 8) verlaufenden Nut (13) in einer unteren Breitseite der zweiten Linearführungseinheit (7, 8) erfolgt.

15. Bewegungseinrichtung (1) nach Anspruch 14, wobei die Nut (13) einen Hinterschnitt (17) enthält, in den ein Befestigungselement (14) des ersten Linearschlittens (5) eingreift.

16. Bewegungseinrichtung (1) nach Anspruch 15, wobei das Befestigungsmittel (14) eine H-Form aufweist.

17. Bewegungseinrichtung (1) nach Anspruch 3 und 10, wobei die Bremse (10) in der Nut (13) angeordnet ist.

18. Bewegungseinrichtung (1) nach einem der vorhergehenden Ansprüche, wobei ein Verhältnis von Breite (a) zu Höhe (b) des Linearschlittens (5, 7, 8) im Bereich von 3:1 bis 10:1, bevorzugt 4:1 bis 6:1 liegt.

19. Bewegungseinrichtung (1) nach einem der vorhergehenden Ansprüche, wobei pro Bewegungsrichtung genau ein Linearschlitten (5, 7, 8) vorgesehen ist.

20. Sitz (F) aufweisend eine Bewegungseinrichtung (1) nach einem der vorhergehenden Ansprüche.

## Claims

1. Movement device (1) for a seat (F), having
- a support (2) with a first linear guide unit (4, 5) which is attached thereto
- and which has a first pair of bearings (4) and a first cuboidal linear slide (5) which is guided in a linearly movable manner between the bearings (4),
- wherein the two bearings of the first pair engage in respective longitudinal sides of the first linear slide (5).

2. Movement device (1) according to Claim 1, furthermore having a rotary bearing (9) which is attached to the first linear slide (5).

3. Movement device (1) according to Claim 1, furthermore having
- a second linear guide unit (7, 8) which is attached fixedly to the first linear slide (5), wherein
- the first linear guide unit (4, 5) and the second linear guide unit (7, 8) have movement directions (x, y) which are angularly offset with respect to each other, in particular are angularly offset perpendicularly with respect to each other in a horizontal plane.

4. Movement device (1) according to Claim 3, wherein
- the second linear guide unit (7, 8) has a second pair of bearings (7) and a second linear slide (8) which is guided in a linearly movable manner between said bearings (7),
- the two bearings of the first pair engage in respective longitudinal sides of the second linear slide (8), and
- the bearings (7) of the second pair are attached fixedly to the first linear slide (5).

5. Movement device (1) according to one of the preceding claims, wherein the bearings (4, 7) of at least one linear guide unit (4, 5, 7, 8) are roller shoes.

6. Movement device (1) according to either of Claims 3 and 4, furthermore having a rotary bearing (9) which is attached to the second linear slide (8).

7. Movement device (1) according to either of Claims 2 and 6, wherein the rotary bearing (9) is attached centrally to the linear slide (5, 8).

8. Movement device (1) according to one of Claims 2, 6 or 7, wherein the rotary bearing (9) is assigned a brake, in particular friction brake.

9. Movement device (1) according to one of Claims 6 to 8, wherein the first linear guide unit (4, 5) is arranged above the support (2), the second linear guide unit (7, 8) is arranged above the first linear guide unit (4, 5) and the rotary bearing (9) is arranged above the second linear guide unit (7, 8).

10. Movement device (1) according to one of the preceding claims, wherein at least one linear guide unit (4, 5, 7, 8) is assigned a brake (11), in particular friction brake.

11. Movement device (1) according to one of the preceding claims, furthermore having a blocking device (12) by means of which the movement device (1) can be blocked, in particular can be blocked in a form-fitting manner, in at least one predetermined position.

12. Movement device (1) according to one of the preceding claims, wherein the bearings (4, 7) have a protrusion (15) facing the respective longitudinal sides of the linear slides (5, 7, 8), said protrusions engaging in longitudinal grooves (6) of the respective longitudinal sides of the respective linear slide (5, 7, 8).

13. Movement device (1) according to Claim 12, wherein the longitudinal grooves (6) are bounded by in each case two sliding rails (16) arranged symmetrically with respect to the longitudinal groove (6).

14. Movement device (1) according to one of Claims 3 to 13, wherein the first linear slide (5) is fastened to the second linear guide unit (7, 8) by means of a groove (13), which is arranged centrally and runs along a longitudinal extent of the second linear guide unit (7, 8), in a lower broad side of the second linear guide unit (7, 8).

15. Movement device (1) according to Claim 14, wherein the groove (13) contains an undercut (17) in which a fastening element (14) of the first linear slide (5) engages.

16. Movement device (1) according to Claim 15, wherein the fastening means (14) has an H shape.

17. Movement device (1) according to Claims 3 and 10, wherein the brake (10) is arranged in the groove (13) .

18. Movement device (1) according to one of the preceding claims, wherein a ratio of width (a) to height (b) of the linear slide (5, 7, 8) lies within the range of 3:1 to 10:1, preferably 4:1 to 6:1.

19. Movement device (1) according to one of the preceding claims, wherein precisely one linear slide (5, 7, 8) is provided per direction of movement.

20. Seat (F) having a movement device (1) according to one of the preceding claims.

## Revendications

1. Dispositif de déplacement (1) pour un siège (F), comprenant
- un support (2) doté d'une première unité de guidage linéaire (4, 5) montée sur celui-ci,
- laquelle comprend une première paire de paliers (4) et un premier chariot linéaire (5) parallélépipédique guidé de manière mobile linéairement entre les paliers (4),
- dans lequel les deux paliers de la première paire viennent en prise dans des côtés longitudinaux respectifs du premier chariot linéaire (5).

2. Dispositif de déplacement (1) selon la revendication 1, comportant en outre un palier rotatif (9) monté sur le premier chariot linéaire (5).

3. Dispositif de déplacement (1) selon la revendication 1, comportant en outre
- une deuxième unité de guidage linéaire (7, 8) montée fixement sur le premier chariot linéaire (5), dans lequel
- la première unité de guidage linéaire (4, 5) et la deuxième unité de guidage linéaire (7, 8) présentent des directions de déplacement (x, y) décalées angulairement l'une par rapport à l'autre, en particulier décalées angulairement l'une par rapport à l'autre de manière perpendiculaire dans un plan horizontal.

4. Dispositif de déplacement (1) selon la revendication 3, dans lequel
- la deuxième unité de guidage linéaire (7, 8) comprend une deuxième paire de paliers (7) et un deuxième chariot linéaire (8) guidé de manière mobile linéairement entre ces paliers (7),
- les deux paliers de la première paire viennent en prise dans des côtés longitudinaux respectifs du deuxième chariot linéaire (8) et
- les paliers (7) de la deuxième paire sont montés fixement sur le premier chariot linéaire (5).

5. Dispositif de déplacement (1) selon l'une des revendications précédentes, dans lequel les paliers (4, 7) d'au moins une unité de guidage linéaire (4, 5, 7, 8) sont des patins de roulement.

6. Dispositif de déplacement (1) selon la revendication 3 ou 4, comprenant en outre un palier rotatif (9) monté sur le deuxième chariot linéaire (8).

7. Dispositif de déplacement (1) selon la revendication 2 ou 6, dans lequel le palier rotatif (9) est monté centralement sur le chariot linéaire (5, 8).

8. Dispositif de déplacement (1) selon l'une des revendications 2, 6 et 7, dans lequel un frein, en particulier un frein à friction, est associé au palier rotatif (9).

9. Dispositif de déplacement (1) selon l'une des revendications 6 à 8, dans lequel la première unité de guidage linéaire (4, 5) est disposée au-dessus du support (2), la deuxième unité de guidage linéaire (7, 8) est disposée au-dessus de la première unité de guidage linéaire (4, 5) et le palier rotatif (9) est disposé au-dessus de la deuxième unité de guidage linéaire (7, 8).

10. Dispositif de déplacement (1) selon l'une des revendications précédentes, dans lequel un frein (11), en particulier un frein à friction, est associé à au moins une unité de guidage linéaire (4, 5, 7, 8).

11. Dispositif de déplacement (1) selon l'une des revendications précédentes, comprenant en outre un dispositif de blocage (12) au moyen duquel le dispositif de déplacement (1) peut être bloqué, en particulier bloqué par complémentarité de forme, dans au moins une position prédéfinie.

12. Dispositif de déplacement (1) selon l'une des revendications précédentes, dans lequel les paliers (4, 7) comprennent une partie bombée (15) tournée vers les côtés longitudinaux respectifs des chariots linéaires (5, 7, 8), lesquelles parties bombées viennent en prise dans des rainures longitudinales (6) des côtés longitudinaux respectifs du chariot linéaire (5, 7, 8) respectif.

13. Dispositif de déplacement (1) selon la revendication 12, dans lequel les rainures longitudinales (6) sont limitées par respectivement deux glissières (16) disposées symétriquement par rapport à la rainure longitudinale (6).

14. Dispositif de déplacement (1) selon l'une des revendications 3 à 13, dans lequel la fixation du premier chariot linéaire (5) à la deuxième unité de guidage linéaire (7, 8) s'effectue au moyen d'une rainure (13) disposée centralement et s'étendant le long d'une étendue longitudinale de la deuxième unité de guidage linéaire (7, 8) dans un côté large inférieur de la deuxième unité de guidage linéaire (7, 8).

15. Dispositif de déplacement (1) selon la revendication 14, dans lequel la rainure (13) comporte une contre-dépouille (17) dans laquelle un élément de fixation (14) du premier chariot linéaire (5) vient en prise.

16. Dispositif de déplacement (1) selon la revendication 15, dans lequel le moyen de fixation (14) présente une forme en H.

17. Dispositif de déplacement (1) selon les revendications 3 et 10, dans lequel le frein (10) est disposé dans la rainure (13).

18. Dispositif de déplacement (1) selon l'une des revendications précédentes, dans lequel un rapport de la largeur (a) à la hauteur (b) du chariot linéaire (5, 7, 8) est compris dans la plage de 3:1 à 10:1, de préférence de 4:1 à 6:1.

19. Dispositif de déplacement (1) selon l'une des revendications précédentes, dans lequel exactement un chariot linéaire (5, 7, 8) est prévu pour chaque direction de déplacement.

20. Siège (F) comprenant un dispositif de déplacement (1) selon l'une des revendications précédentes.
